(19) Europäisches Patentamt
European Patent Office
Office européen des brevets

(11) Publication number: **0 009 526**
**A1**

# (12) EUROPEAN PATENT APPLICATION

(21) Application number: **78300482.3**

(22) Date of filing: **10.10.78**

(51) Int. Cl.³: **C 09 D 3/58**
C 08 G 59/16, C 08 G 59/42
B 65 D 25/14

(43) Date of publication of application:
**16.04.80 Bulletin 80/8**

(84) Designated Contracting States:
**BE DE FR GB NL SE**

(71) Applicant: **MOBIL OIL CORPORATION**
**150 East 42nd Street**
**New York New York 10017(US)**

(72) Inventor: **Anderson, Ronald William**
**2820 Wooster Drive**
**Allison Park Pennsylvania 15101(US)**

(72) Inventor: **Lamanna, Richard Allen**
**190 Sycamore Drive**
**McMurray Pennsylvania 15317(US)**

(74) Representative: **Jones, Alan John et al,**
**CARPMAELS & RANSFORD 43 Bloomsbury Square**
**London, WC1A 2RA(GB)**

## (54) Water-solubilizable epoxy resin and coating composition comprising the resin for metal food contact surfaces.

(57) A resin is provided which is the adduct of a monocarboxylic acid and a diglycidyl ether of a bisphenol or of a monocarboxylic acid, a bisphenol and a diglycidyl ether of a bisphenol, reacted with an anhydride to an Acid No. of 35 to 150. This resin is solubilized with a volatile amine, ammonia or $NH_4OH$ in a solvent mixture of water, alkoxyethanols, alcohols and alkyl ethers of diethylene glycol and combined with an aminoplast to produce a coating composition utilizable to coat surfaces that will contact a food or beverage, such as in metal packaging containers.

EP 0 009 526 A1

Croydon Printing Company Ltd.

# WATER-SOLUBILIZABLE EPOXY RESIN AND COATING COMPOSITION COMPRISING THE RESIN FOR METAL FOOD CONTACT SURFACES

This invention relates to epoxy based resins water-solubilizable with ammonia or an amine and with water based coating compositions containing them.

It has been proposed to form water dilutable emulsions or dispersions containing epoxy resins for use as water based coatings. Such coatings have disadvantages and it is highly desirable to provide water-soluble epoxy based coatings. Prior epoxy based coatings have poor shelf life due to the presence of oxirane groups and/or unreacted anhydride.

In copending Application Serial No. 736,984, filed October 29, 1976, now U.S. Patent No. 4,105,614, there is disclosed a resin in which the epoxy groups of a diglycidyl ether are capped with a bisphenol and the resultant material is reacted with an anhydride to provide water-solubilizable carboxyl groups. The resins of this invention utilizing a monocarboxylic acid, such as stearic acid, have advantages over the resins of U.S. Patent No. 4,105,614.

1. Coatings made therefrom do not absorb n-heptyl p-hydroxybenzoate, a preservative used to stabilize unpasteurized beer.
2. Coatings made therefrom have less effect on the flavor of beer on short term storage.

3. The coating formulations have higher solids content at application viscosity, which permits use of a single coating to attain coating weights necessary in standard applications. Application viscosity is generally 154-100 sec., preferably 25-70 sec., #2 Zahn cup.

4. The final coating formulation has better shelf life, as measured by viscosity change.

Insofar as is now known a resin system of this type and coatings containing them have not been proposed.

This invention provides a water solubilzable resin that comprises an adduct of a monocarboxylic acid and a diglycidyl ether of a bisphenol or of a monocarboxylic acid, a bisphenol and a diglycidyl ether of a bisphenol, using an equivalent ratio of total monocarboxylic acid and bisphenol, if used, to diglycidyl ether between about 1:1 and about 1.2:1, further adducted with an anhydride in an amount sufficient to provide an acid number between about 35 and about 150.

It also provides a coating composition comprising such resin and an aminoplast, in a weight ratio between about 95:5 and about 70:30 solubilized with a volatile tertiary amine, ammonia or ammonium hydroxide to a pH of about 7.0 to about 9.1 in at least one solvent of the group alcohols, alkoxyethanols, ketones and alkyl ethers of diethylene glycol, each present in between about one weight percent and about 20 weight percent of the weight of the final composition and diluted with water to a solids content between about 10 weight percent and about 25 weight percent.

It also provides substrates coated with such coating composition and metal packaging containers, interior coated with such coating composition and baked, containing a food or beverage.

The water dilutable resins of this invention are prepared by adducting sufficient monocarboxylic acid or monocarboxylic acid and bisphenol to a diglycidyl ether of a bisphenol to react with all epoxy groups. The diglycidyl ether is usually heated to about 80-90°C in a suitable solvent which is not only a solvent for the reaction but can be a component of a binary azeotrope with water. Then the monocarboxylic acid or monocarboxylic acid and bisphenol are added and the adduction is usually continued at about 150°C for 2-3 hours until the epoxy value is 0.008 or less. This adduction reaction can be carried out in any order, i.e., monocarboxylic acid first followed by bisphenol, if used; or bisphenol, if used, first followed by monocarboxylic acid. It is preferred to react monocarboxylic acid, bisphenol and diglycidyl ether of a bisphenol, simultaneously.

Suitable solvents are ketones, ethers and esters. Non-limiting examples of suitable solvents are methyl ethyl ketone, methyl isobutyl ketone, diisobutyl ether and n-propyl acetate, n-butyl acetate, isobutyl acetate, n-propyl propionate and ethyl butyrate. Ketones are especially preferred.

The reaction mixture should be refluxed to remove all water that may be present. Anhydrous conditions are necessary before the anhydride is added. After all water that may be present has been removed, an anhydride is added in an amount sufficient to provide an acid number between about 35 and about 150, preferably 40-90. Generally the reaction is carried out at about 100-120°C for about 2-4 hours. The reaction of the anhydride is complete when the alcoholic acid number and the aqueous acid number are substantially the same, usually within two units of each other. In order to ensure good shelf life, the anhydride number must be below about 6 and preferably zero. The anhydride number is the difference between the alcoholic acid number and the aqueous acid number.

An alkoxy ethanol boiling at about 130°C or higher and other solvents, such as alcohols, are added to reduce solids content to between about 60 and about 75 weight percent.

The epoxy resin utilizable herein is a diglycidyl ether of a bisphenol, a class of compounds which are constituted by a pair of phenolic groups interlinked through an aliphatic bridge. While any of the bisphenols may be used, the compound 2,2-bis(p-hydroxyphenyl)propane, commonly known as bisphenol A, is more widely available in commerce and is preferred. The diglycidyl ethers of bisphenol A are readily available commercially. The epoxy resin, i.e., the diglycidyl ether of a bisphenol, will have an epoxy equivalent weight between about 180 and about 2500.

The aliphatic monocarboxylic acids utilizable herein have between 8 and 18 carbon atoms and a molecular weight between about 140 and about 290.

Mixtures of monocarboxylic acids are contemplated. Non-limiting examples of the aliphatic monocarboxylic acids and mixtures thereof are octanoic acid, nonanoic acid, decanoic acid, undecanoic acid, lauric acid, tridecanoic acid, myristic acid, pentadecanoic acid, palmitic acid, heptadecanoic acid, stearic acid, oleic acid, linoleic acid, linolenic acid, ricinoleic acid, linseed fatty acids, safflower fatty acids, soya fatty acids, tall oil fatty acids, cottonseed fatty acids, castor oil fatty acids, dehydrated castor oil fatty acids and tung oil fatty acids.

The bisphenol that is adducted with the epoxy resin can be any bisphenol as disclosed hereinabove. Preferably a bisphenol A is used. The equivalent ratio of total monocarboxylic acid and bisphenol, if used, to diglycidyl ether of a bisphenol will be between about 1:1 and about 1.2:1. The equivalent ratio of monocarboxylic acid to diglycidyl ether of a bisphenol will be between about 0.1:1 and about 1:1. The equivalent ratio of bisphenol to diglycidyl ether of a bisphenol will be between about 0.0:1 and about 0.9:1. The basic purpose of using a bisphenol is to upgrade the molecular weight (MW) of the diglycidyl ether of a bisphenol to ensure sufficient molecular weight of the final acidic resin. If the diglycidyl ether of a bisphenol has sufficiently high molecular weight, a bisphenol is not used. In general, the molecular weight of the final resin, as measured by Gel Permeation Chromatography, will be between about 5,000 and about 25,000. Preferably the MW should be between about 8,000 and about 20,000. Most preferably, the MW should be between about 11,000 and about 13,000.

The preferred anhydride used in the resins of this invention is trimellitic anhydride. Other cyclic anhydrides which can be used include succinic anhydride, methyl succinic anhydride, tricarballylic anhydride, phthalic anhydride, hexahydrophthalic anhydride and maleic anhydride.

The amount of anhydride used should be sufficient to obtain an acid number of 35 to 150, preferably between about 40 and about 90, in order to ensure water solubility when the resin is neutralized.

In order to obtain good shelf life of the coating composition, there should be no unreacted anhydride groups. The amount of anhydride to be used can be readily calculated from the hydroxyl number of the monocarboxylic acid and bisphenol adducted epoxy.

In forming a coating composition containing the acidic resin, the resin is neutralized with a tertiary amine, ammonia or ammonium hydroxide to a pH of about 7.0 to about 9.1. Typical amines utilizable include triethylamine, tripropyl amine, dimethylethanol amine, diethylethanol amine, dimethylethyl amine and methyldiethyl amine.

The material used to thermoset the coating is a conventional aminoplast cross-linking agent. Such agents are well known in the art. There can be used any of the thermosetting alkylated aminoplast resins, such as the ureaaldehyde resins, the melaminealdehyde resins, the dicyandiamide-aldehyde resins and other aminoplast-aldehyde resins such as those triazine resins produced by the reaction of an aldehyde with formoguanamine, ammeline, 2-chloro-4,6-diamino-1,3,5-triazine, 2-phenyl-p-oxy-4,6-diamino-1,3,5-triazine, 6-methyl-2,4-diamino-1,3,5-triazine; 2,4,6-trihydrazine-1,3,5-triazine and 2,4,6-triethyl-triamino-1,3,5-triazine. The mono-, di- or triaralkyl or mono-, di- or triaryl melamines, for instance 2,4,6-triphenyltriamino-1,3,5-triazine are preferred. As aldehydes used to react with the amino compound to form the resinous material, one may use such aldehydes as formaldehyde, acetaldehyde, crotonic aldehyde, acrolein or compounds which engender aldehydes, such as hexamethylenetetramine, paraldehyde, paraformaldehyde and the like. The preferred aminoplast is hexamethoxymethylmelamine. The weight ratio of acidic resin to aminoplast will be between about 95:5 and about 70:30.

The solvent system used in the coating composition will include alcohols, alkoxy ethanols, ketones and alkyl ethers of diethylene glycol. Suitable alcohols are those having between about 2 and about 8 carbon atoms and having a boiling point up to about 180°C. Non-limiting examples of utilizable alcohols include special denatured ethanols (Formula 1), propanol, butanol, isobutanol, t-butanol, pentanol, hexanol, 2-methylpentanol, 3-methylpentanol, heptanol, isoheptanol, octanol, isooctanol and 2-ethylhexanol.

The alkoxy ethanols utilizable are those having between 1 and 6 carbon atoms in the alkoxy group. Non-limiting examples include methoxy ethanol, ethoxy ethanol, butoxy ethanol and hexoxy ethanol. Also utilizable are propoxy propanol and butoxy propanol.

The ketones utilizable are aliphatic ketones containing between 3 and 8 carbon atoms. Non-limiting examples of utilizable ketones are acetone, diethyl ketone, methylethyl ketone, methylpropyl ketone, methylisobutyl ketone, methylamyl ketone, methylhexyl ketone, ethylpropyl ketone, ethylbutyl ketone, ethylamyl ketone and methoxy acetone.

The utilizable alkyl ethers of diethylene glycol will contain between 1 and 4 carbon atoms in the alkyl group. Non-limiting examples include the monomethyl ether of diethylene glycol, the monoethyl ether of diethylene glycol and the monobutyl ether of diethylene glycol.

In general, alkylethanols, ketones and alkyl ethers of diethylene glycol are primarily solvents for resin and aminoplast. Lower alcohols, such as ethanol, t-butanol, also assist in wetting the surface being coated. Higher alcohols, such as isooctanol, also serve as defoamants. In controlling viscosity of the final coating composition, higher boiling solvents, such as hexoxyethanol, tend to increase viscosity and lower boiling solvents, such as butoxyethanol and methyl ethyl ketone, tend to decrease viscosity.

Although mixtures of organic solvents are highly preferred, satisfactory coating compositions can be prepared using a single methoxy ethanol, ketone or alkyl ether of diethylene glycol.

In the finished coating composition, the solids content (resin and aminoplast) will be between about 10 and about 25 weight percent, preferably about 20-23 weight percent. The volatile system (including amine, ammonia or ammonium hydroxide) will be between about 90 weight percent and about 75 weight percent of the finished coating composition, preferably about 77-80 weight percent. About 65 to 90 weight percent of the volatile system will be water and the balance (35 to 10 weight percent) will be organic volatile solvents, including amine, ammonia or ammonium hydroxide. Preferably, the ratio of water to organic volatiles will be about 70:30 to 80:20 in the volatile system. Each component of the solvent system will be present in between about 1 weight percent and about 20 weight percent of the weight of the final composition. A typical and preferred solvent system is defined in the working examples.

In the following illustrative examples all parts are parts by weight, unless otherwise indicated.

Example 1

Into a reaction kettle there was charged 55.4 parts of an 80 weight percent solids solution in methyl ethyl ketone (MEK) of a diglycidyl ether of bisphenol A having an epoxy equivalent weight of 450-550 and an epoxy value of 0.22, based on solids. The solution was heated to 88°C (190°F) and there were added 10.02 parts bisphenol A, 5.84 parts of a mixture of 70 weight percent stearic acid and 30 weight percnt palmitic acid, and 0.17 part tri-n-butylamine (catalyst). The reaction mixture was heated to 149°C (300°F), removing MEK distillate as necessary. At 149°C, the reaction mixture was held at total reflux for 2 hours and sampled for solids and epoxy value. Reflux was maintained until epoxy value was 0.008 maximum. Then, the reaction was cooled to 115°C (240°F), adjusting solids to 92 ± 0.5 weight percent with MEK distillate. At 115°C, there were added 5.95 parts trimellitic anhydride and the reaction was heated 118°C (245°F) for 2 hours. Then, the reaction mixture was sampled for anhydride number which was to be 6.0 maximum. After 2 1/2 hours at 118°C the reaction was sampled for anhydride number and 15.06

parts n-butanol and 7.52 parts butoxy ethanol were added and held until the mixture was uniform. Final values for acid number, anhydride number, weight percent solids and molecular weight are set forth in Table 1.

Examples 2 through 9

A series of runs were carried out in a manner similar to Example 1, with the following exceptions: Example 2 is a laboratory repeat of Example 1; Example 3 is a pilot plant run of Example 1; Example 4 uses excess stearic acid; Example 5 uses less stearic acid; in Example 6 the stearic acid was reacted first, followed by bisphenol A; in Example 7, more stearic acid was used and less bisphenol A; Example 8 was the same as Example 2, except that the final solvent was butyl ether of diethylene glycol instead of the 2:1 weight ratio mixture of butanol and butoxy ethanol used in the other examples; an in Example 9, a greater amount of trimellitic anhydride was used. Pertinent data and final values for these examples are set forth in Table 1 along with Example 1.

TABLE I

| Example | 1 | 2 | 3 | 4 | 5 | 6 | 7 |
|---|---|---|---|---|---|---|---|
| **Reactants, Equivalents** | | | | | | | |
| Epon 1001 (1) | 1.00 | 1.00 | 1.00 | 1.00 | 1.00 | 1.00 | 1.00 |
| Bisphenol A | 0.90 | 0.90 | 0.90 | 0.90 | 0.90 | 0.90 | 0.84 |
| Stearic Acid (2) | 0.21 | 0.21 | 0.21 | 0.27 | 0.17 | 0.21 | 0.27 |
| TMA (3) | 0.30 | 0.30 | 0.30 | 0.33 | 0.31 | 0.30 | 0.32 |
| **Final Values** | | | | | | | |
| Wt. % Solids | 70.0 | 70.2 | 70.1 | 70.6 | 71.2 | 70.7 | 69.8 |
| Acid No. | 54.9 | 55.4 | 54.0 | 53.6 | 53.8 | 52.1 | 52.5 |
| Anhydride No. | 6.0 | 3.5 | 5.9 | 2.0 | 4.7 | 1.0 | 2.6 |
| Mol. Wt. | 11,443 | 12,215 | 13,368 | 8,975 | 17,945 | 15,563 | 11,471 |

(1) Diglycidyl ether of bisphenol A, Epoxy Value = 0.22, 80 wt. % solids in MEK
(2) Mixture 70 wt. % stearic acid/30 wt. % palmitic acid
(3) Trimellitic anhydride

TABLE I (Continued)

| 8 | 9 |
|---|---|
| 1.00 | 1.00 |
| 0.90 | 0.90 |
| 0.22 | 0.21 |
| 0.32 | 0.42 |
| 70.1 | 70.3 |
| 53.0 | 72.5 |
| 3.0 | 4.7 |
| 12,778 | 11,298 |

Examples 10 and 11

Using the general procedure of Example 1, resins of this invention can be prepared using relatively low molecular weight diglycidyl ethers of bisphenol A. Example 10 is like Example 1 except for the use of a different epoxy resin. In Example 11, the diglycidyl ether of bisphenol A is upgraded in molecular weight with bisphenol A and then reacted with stearic acid.

The formulations, in parts, for these examples are set forth in Table II.

TABLE II

| | Example 10 | Example 11 |
|---|---|---|
| Epoxy resin X (1) | 34.42 | --- |
| Epoxy resin Y (2) | --- | 33.88 |
| MEK | 5.54 | 5.35 |
| Bisphenol A | 18.50 | 13.84 |
| Stearic acid (3) | 10.78 | 15.98 |
| Tri-n-butylamine | 0.31 | 0.19 |
| Trimellitic anhydride | 6.30 | 6.30 |
| Butoxy ethanol | 8.05 | 12.23 |
| n-Butanol | 16.10 | --- |
| t-Butanol | --- | 12.23 |

(1) Diglycidyl ether of bisphenol A. Epoxy equivalent is 185 - 192. Epoxy value is 0.52.

(2) Diglycidyl ether of bisphenol A. Epoxy equivalent is 193 - 203.

(3) Mixture 70 wt % stearic acid/30 wt % palmitic acid.

Example 12

This example demonstrates the preparation of a resin in which the epoxy is of sufficiently high molecular weight that no bisphenol A, but only stearic acid, was used. In a reaction kettle were charged 47.72 parts of diglycidyl ether of bisphenol A having an epoxy equivalent weight of 850 and 5.35 parts of methyl ethyl ketone (MEK). The mixture was heated to about 88°C to dissolve the resin (about 55 minutes). Then, 15.98 parts stearic acid and 0.19 part tri-n-butylamine were added and the reaction mixture was heated to 150°C, collecting about 146 g MEK distillate, and held at 150°C for 2 hours. After 1 1/2 hours, a sample of the reaction mixture showed an epoxy value of 0.004. The MEK distillate was added back to the reaction mixture and 6.30 parts trimellitic anhydride were added. The reaction mixture was heated to reflux at about 116°C, removing 11-12 g MEK distillate and held at reflux form 2 1/2 hours. The mixture was sampled and then reduced with 12.23 parts butoxy ethanol and 12.23 parts t-butanol. The final values of the resin solution were:

| | |
|---|---|
| Wt. % solids | 68.8 |
| Acid No. | 65.8 |
| Anhydride No. | 3.6 |
| Mol. Wt. | 7,000 |

The following Examples 13 through 15 illustrate the preparation of coating compositions using the resins of this invention.

Example 13

A mixture of 28.93 parts of the product described in Example 1, 2.25 parts hexamethoxymethylmelamine, 3.37 parts n-butanol, 0.30 part hexoxy ethanol and 0.37 part butyl ether of diethylene glycol was stirred until uniform, while not permitting the temperature to exceed 54°C. Then, there were added 1.29 parts denatured alcohol (Synasol), which contains denaturants in the proportions of 100 gallons of special denatured alcohol Formula 1, 1 gallon of methyl isobutyl ketone, 1 gallon ethyl acetate and 1 gallon aviation gasoline. This was stirred until uniform. There was added a premixed mixture of 1.30 parts aqueous ammonia (26° Baume) and 2.19 parts deionized water. This was stirred until uniform and then diluted with 60.00 parts deionized water.

The final coating composition has a solids content of 22.63 weight percent, containing 90.06 weight percent resin of Example 1 and 9.94 weight percent hexamethoxymethylmelamine. The pH was 8.5 - 9.0.

Examples 14 and 15

In an alternative mixing procedure, n-butanol, butoxy ethanol and hexamethoxymethylmelamine were charged and agitation was begun. The product described in Example 1 was added and stirred until uniform, not permitting the temperature to exceed 49°C. A premixed mixture of aqueous ammonia (26° Baume) and deionized water was added and stirred until uniform. Finally, the composition was diluted with deionized water to produce the final coating composition. The amounts of components, in parts, in each Example 14 and 15 and pertinent data on the final coating compositions are set forth in Table III.

TABLE III

| | Ex. 14 | Ex. 15 |
|---|---|---|
| n-Butanol | 0.86 | 2.99 |
| Butoxy ethanol | 3.26 | 4.36 |
| Hexamethoxymethylmelamine | 2.35 | 2.33 |
| Example 1 product | 30.03 | 29.73 |
| Aqueous ammonia | 1.25 | 1.36 |
| Deionized water | 2.00 | 1.98 |
| Deionized water | 60.25 | 57.25 |
| Solids, wt % | 23.5 | 23.27 |
| pH | 8.5-9.0 | 8.5-9.0 |
| Resin/aminoplast, wt % | 90/10 | 90/10 |

The coating composition of this invention is primarily useful for coating aluminum, tin plated steel, pretreated metals, steel and metals coated with the same or different resin composition (i.e., a second coat). The coating composition can be used however for coating other substrates such as wood, paper and leather. The most preferred and useful use of the coating composition is for interior coating of metal containers that will come in contact with food or beverages. Coating can be done by any coating procedure well known to those skilled in the art including direct rollcoating, reverse rollcoating, electrodeposition, spraying, flow coating and the like. The preferred method however in coating the interior of metal containers is by spraying. After coating the substrate, the coating is baked for about 5 seconds to about 5 minutes at between about 250°F and about 600°F. A typical bake is for about 2 minutes at about 400°F.

The coating compositions of Examples 13, 14 and 15 were tested for adhesion, pasteurized adhesion and blush. The adhesion test is carried out by cross-hatching a coated area with individual score lines approximately 1/16 inch apart. The Scotch tape is firmly applied to the cross-hatched area and removed with a quick snap. The amount of coating remaining on the panel is viewed visually and rated on a 0-10 scale (10 = perfect adhesion). Pasteurization is carried out by immersing the coated panels in water at 145°F for 30 minutes. Then the panels are wiped dry with absorbent towels and the adhesion test is carried out as above described. The amount of blush is rated on the pasteurized panel using a scale of 0 to 10 in which 0 is very severe blush and 10 is no blush.

Example 16

Treated aluminum test panels were coated with the coating compositions of Examples 13, 14 and 15 with a bar coater to a film weight of 2.5 to 3.0 milligrams per square inch. These test panels showed an adhesion rating of 10 in the adhesion test. In the pasteurization test, the panels gave a rating of 10 adhesion and 10 on blush.

The effect of a coating on the flavor of a packaged product is determined in a Flavor Difference Evaluation. Bottles of commercial beer are chilled to about 40-45°F and uncapped. Sheets of aluminum foil (1 mil) are bar coated on both sides with the coating being evaluated and baked. Then, a sheet of foil is rolled lightly and inserted into each bottle of beer and the bottle is recapped with a new cap.

For comparison, additional bottles of the same beer are provided with rolls of aluminum foil that have been coated on both sides with an accepted commercial coating for interior coating (solvent-based epoxy coating) and baked. The test coating and the control coating were baked for 30 seconds at 400°F metal temperature.

After storage for 3 days at 100°F, the bottles of beer are again chilled and taste rated by 9 experienced tasters comparing the test coatings vs. the control. The arithmetic average of the ratings is calculated ($\bar{x}$). Then, all rating values outside $\bar{x} \pm 2$ are excluded and another average is calculated as the quality rating (QR). The following rating scale was used on a basis of 1-9.

| | |
|---|---|
| 1 | = no flavor difference |
| 1.0 - 1.5 | = excellent flavor |
| 1.5 - 2.0 | = very good flavor |
| 2.0 - 2.5 | = good flavor |
| 2.5 - 3.0 | = acceptable flavor |
| $>$3.0 | = not acceptable |

In unpasteurized beer, n-heptyl p-hydroxy benzoate is used in an amount of 12 ppm to inhibit microbial growth. It is highly desirable that a coating used to coat the interior of metal beer containers does not absorb an appreciable amount of the n-heptyl p-hydroxybenzoate (sold under the registered trademark "Staypro").

This property is tested using a simulated beer, an aqueous solution of 8 volume percent ethanol and 12 ppm "Staypro." Metal beer containers are interior coated with the coating composition under test and baked in the usual baking cycle, e.g., 2 minutes at 400°F. Then, the containers are filled with simulated beer and stored at room temperature for one week. At the end of the week the simulated beer is analyzed to determine the amount of heptyl p-hydroxybenzoate remaining. This is done by measuring light transmission on a spectrophotometer at a wavelength of 255 millimicrons, in comparison with the original.

Examples 17, 18 and 19

Using resins as described in Examples 1 and 9 herein and in Example 1 of Serial No. 736,984, now U.S. Patent No. 4,105,614, coating formulations were prepared by the procedure of Example 14. Each formulation contained 10 weight percent (on solids basis) hexamethoxymethylmelamine and the volatile system had a volume percent ratio of water/organic solids of 80/20. The formulations were used in testing for beer flavor rating and for resistance to absorption of n-heptyl p-hydroxybenzoate. Pertinent data and test results are set forth in Table IV.

TABLE IV

| | Resin Description | | Beer Flavor | Staypro |
|---|---|---|---|---|
| Ex. | Ex. | Source | QR | ppm remaining |
| 17 | 1 | Herein | 1.2 | 11.9 |
| 18 | 9 | Herein | 1.1 | 11.8 |
| 19 | 1 | SN 736,984 | 1.3 | 10.5 |

Storage stability (shelf life) of a coating composition is measured by the change in viscosity. A significant increase in viscosity is not desirable. A coating composition as described in Example 17 and, for comparison, a coating composition as described in Example 19 were placed in lined coating containers and stored at 80°F. Periodically the compositions were tested for viscosity at 80°F using #2 Zahn cup. The results are set forth in Table V.

TABLE V

| | Viscosity, seconds | |
|---|---|---|
| Time, weeks | Example 17 | Example 19 |
| Initial | 25 - 40 | 40 - 50 |
| 8 | 20 - 30 | 70 - 80 |
| 14 | 20 - 30 | --- |
| 16 | --- | 90 |

CLAIMS

1. A water solubilizable resin that comprises an adduct of a monocarboxylic acid and a diglycidyl ether of a bisphenol, or of a monocarboxylic acid, a bisphenol and a diglycidyl ether of a bisphenol, using an equivalent ratio of total monocarboxylic acid and bisphenol, if used, to diglycidyl ether between about 1:1 and about 1.2:1, further adducted with an anhydride in an amount sufficient to provide an acid number between about 35 and about 150.

2. The resin of Claim 1 wherein said bisphenol is bisphenol A.

3. The resin of Claim 2 wherein said anhydride is trimellitic anhydride and said acid number is between about 40 and about 90.

4. The resin of Claim 3 wherein said diglycidyl ether is the diglycidyl ether of bisphenol A having an epoxy equivalent weight of 450 - 550, said monocarboxylic acid is a mixture of 70 weight percent stearic acid and 30 weight percent palmitic acid and the equivalent ratio of said monocarboxylic acid and bisphenol A to said diglycidyl ether is between about 1:1 and about 1.2:1.

5. The resin of Claim 3 wherein said diglycidyl ether is the diglycidyl ether of bisphenol A having an epoxy equivalent weight of about 850, said monocarboxylic acid is stearic acid and the equivalent ratio of stearic acid to said diglycidyl ether is about 1:1.

6. The resin of Claim 4 dissolved in a mixture of a $C_1$-$C_4$ alkoxyethanol and a $C_2$-$C_4$ alcohol to a solids content between about 60 and about 75 weight percent.

7. The resin of Claim 6 wherein said alkoxyethanol is butoxyethanol and said alcohol is butanol.

8. The resin of Claim 5 dissolved in a mixture of butoxyethanol and butanol.

9. A coating composition comprising the resin of Claim 1 and an aminoplast, in a weight ratio between about 95:5 and about 70:30 solubilized with a volatile tertiary amine, ammonia or ammonium hydroxide to a pH of about 7.0 to about 9.1 in at least one solvent of the group of alcohols, alkoxyethanols, ketones and alkyl ethers of diethylene glycol, each present in between about 1 weight percent and about 20 weight percent of the weight of the final composition and diluted with water to a solids content between about 10 weight percent and about 25 weight percent.

10. The coating composition of Claim 9 wherein said resin is the resin of Claim 6.

11. The coating composition of Claim 9 wherein said resin is the resin of Claim 7, said aminoplast is hexamethoxymethylmelamine, the solvent mixture is a mixture of butoxyethanol, butanol, methyl ethyl ketone, butyl ether of diethylene glycol, hexoxyethanol and denatured alcohol, said volatile system contains about 80 weight percent water and about 20 weight percent organic solvents and said solids content is about 20-23 weight percent.

European Patent Office

# EUROPEAN SEARCH REPORT

Application number EP 78 30 0482

## DOCUMENTS CONSIDERED TO BE RELEVANT

| Category | Citation of document with indication, where appropriate, of relevant passages | Relevant to claim |
|---|---|---|
| X | DE - A - 1 519 329 (REICHHOLD) * Page 1, 2nd paragraph to page 15, first paragraph * -- | 1-6,9, 10 |
| X | FR - A - 1 442 890 (DORST) * Page 1, column 2, 2nd paragraph - page 3, column 1, first paragraph * -- | 1-3,6, 7 |
| X | FR - A - 2 314 222 (WHITTAKER) * Page 2, line 22 - page 13, line 38 * -- | 1-3,5-7,9,10 |
| A | DE - A - 1 495 249 (WERKE ALBERT) * Page 1, paragraph 3 - page 4, 2nd paragraph * -- | 1-3,5, 9 |
| A | FR - A - 1 388 543 (PINCHIN, JOHNSON) * Page 1, column 1, 2nd paragraph - page 2, column 2, first paragraph * -- | 1,2,4, 5 |
| A | FR - A - 1 510 809 (DEVOE & RAYNOLDS) * Page 1, column 1, paragraph 3 - page 4, column 2, paragraph 3; page 6, column 1, paragraph 2 * -- | 1,2,9 |

./.

**CLASSIFICATION OF THE APPLICATION (Int. Cl.²)**

C 09 D 3/58
C 08 G 59/16
59/42
B 65 D 25/14

**TECHNICAL FIELDS SEARCHED (Int.Cl.²)**

C 09 D 3/58
C 08 G 59/16
59/42
C 08 L 63/00
B 65 D 25/14

**CATEGORY OF CITED DOCUMENTS**

- X: particularly relevant
- A: technological background
- O: non-written disclosure
- P: intermediate document
- T: theory or principle underlying the invention
- E: conflicting application
- D: document cited in the application
- L: citation for other reasons
- &: member of the same patent family, corresponding document

b The present search report has been drawn up for all claims

| Place of search | Date of completion of the search | Examiner |
|---|---|---|
| The Hague | 13-06-1979 | GERARDIN |

EPO Form 1503.1 06.78

0009526

European Patent Office

# EUROPEAN SEARCH REPORT

Application number
EP 78 30 0482



| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| A | FR - A - 1 146 564 (BATAAFSCHE PETROLEUM)<br>* Page 1, column 1, paragraph 6 - page 6, column 1, paragraph 1 *<br>-- | 1,2 | |
| A | DE - A - 2 600 811 (EPPCO)<br>* Claims 1,10,11 *<br>---- | 1 | TECHNICAL FIELDS SEARCHED (Int. Cl.²) |